# EUROPÄISCHE PATENTSCHRIFT

(11) **EP 3 960 601 B1**
(45) Veröffentlichungstag und Bekanntmachung des Hinweises auf die Patenterteilung: **27.09.2023**
(21) Anmeldenummer: 21193534.1
(22) Anmeldetag: 27.08.2021
(51) Int. Cl.: B62J 17/086, B62J 17/10

(54) **MOTORRAD MIT SEITENWINDSTABILISIERUNG**
MOTORCYCLE WITH SIDE WIND STABILISATION
MOTOCYCLE À STABILISATION EN CAS DE VENT LATÉRAL

(30) Priorität: 31.08.2020 DE 102020122742
(43) Veröffentlichungstag der Anmeldung: 02.03.2022
(73) Patentinhaber: Moving Terrain AG, 87477 Sulzberg (DE)
(72) Erfinder: Unzicker, Stefan, 87477 Sulzberg (DE)
(74) Vertreter: 2s-ip Schramm Schneider Bertagnoll Patent- und Rechtsanwälte Part mbB

(56) Entgegenhaltungen:
- CN-A- 106 741 228
- CN-A- 111 267 969
- CN-U- 207 617 826
- CN-U- 209 776 592
- DE-A1- 19 912 140
- DE-U1-202012 008 893
- JP-A- S6 167 676

## Beschreibung

### Gebiet der Erfindung

Die Erfindung betrifft ein Motorrad mit einer vollständig oder zumindest weitgehend vollständig geschlossenen Fahrgastzelle.

### Hintergrund der Erfindung

Motorisierte Zweiräder mit einer Fahrgastzelle sind aus der DE 10 247 941 A1 bekannt. Bei dem dort gezeigten motorisierten Zweirad handelt es sich allerdings nicht um ein Motorrad im herkömmlichen Sinne, denn es sind ein Fahrersitz und ein hinter dem Fahrersitz angeordneter Beifahrersitz vorgesehen, wobei sowohl der Fahrersitz als auch der Beifahrersitz wie Sitze eines herkömmlichen Personenkraftwagens (PKW) ausgestaltet sind.

Nachteilig bei dem aus der DE 10 247 941 A1 gezeigten Fahrzeug ist allerdings, dass es aufgrund der geschlossenen Fahrgastzelle anfällig gegenüber Seitenwinden oder anderen auf die seitlichen Flächen der Fahrgastzelle wirkenden Kräften ist, was die Sicherheit und den Komfort während einer Fahrt negativ beeinflussen kann.

DE 20 2012008893 U1 betrifft ein Motorrad gemäß dem Oberbegriff des Anspruchs 1.

### Aufgabe der Erfindung

Aufgabe der vorliegenden Erfindung ist es daher, ein Motorrad mit einer vollständig oder zumindest weitgehend vollständig geschlossenen Fahrgastzelle bereitzustellen, bei dem die negativen Auswirkungen von auf die seitlichen Flächen der Fahrgastzelle wirkenden Kräften auf die Sicherheit während einer Fahrt reduziert oder weitgehend vermieden werden.

### Erfindungsgemäße Lösung

Erfindungsgemäß wird diese Aufgabe mit einem Motorrad nach dem unabhängigen Patentanspruch gelöst. Vorteilhafte Ausgestaltungen der Erfindung sind in den abhängigen Patentansprüchen angegeben.

Bereitgestellt wird demnach ein Motorrad, wobei das Motorrad eine weitgehend geschlossene Fahrgastzelle aufweist und wobei die Fahrgastzelle zumindest eine Stabilisierungseinrichtung zur Seitenwindstabilisierung aufweist.

Die Stabilisierungseinrichtung umfasst zumindest ein relativ zur Fahrgastzelle auslenkbares Seitenruder. Damit kann seitlich auf die Fahrgastzelle wirkenden Kräften entgegengewirkt werden.

Das zumindest eine Seitenruder ist am Heck und/oder am Dach und/oder an der Frontseite der Fahrgastzelle angeordnet.

An dem zumindest einen Seitenruder ist ein relativ zum Seitenruder auslenkbares Hilfsruder angeordnet, wobei das Hilfsruder derart an dem Seitenruder angelenkt ist, dass es entgegen der Auslenkrichtung des Seitenruders auslenkbar ist. Damit können auf das Seitenruder wirkende Kräfte neutralisiert werden.

Das Hilfsruder ist über ein Koppelgelenk an dem Seitenruder angelenkt, wobei das Koppelgelenk derart ausgestaltet ist, dass ein Auslenken des Seitenruders ein Auslenken des Hilfsruders entgegen der Auslenkrichtung des Seitenruders bewirkt.

Mit Hilfe der Seitenwindstabilisierung kann das Motorrad beim Fahren leichter in der Spur gehalten werden, was insbesondere bei einem Motorrad mit einer geschlossenen Fahrgastzelle von Vorteil ist.

Das zumindest eine Seitenruder kann von einer ersten Position in eine zweite Position auslenkbar sein, wobei
- in der ersten Position das Seitenruder parallel zur Längsachse des Motorrades verläuft, und
- in der zweiten Position das Seitenruder in einem von Null verschiedenen Winkel (α) zur Längsachse des Motorrades verläuft.

Die Stabilisierungseinrichtung kann zumindest zwei Spreizklappen umfassen, wobei
- eine erste Spreizklappe an der rechten Seite der Fahrgastzelle und
- eine zweite Spreizklappe an der linken Seite der Fahrgastzelle angeordnet sind, und wobei die Spreizklappen ausklappbar an der Fahrgastzelle angelenkt sind. Die Spreizklappen können alternativ zum Seitenruder oder zusätzlich zum Seitenruder vorgesehen werden.

Vorteilhaft kann es sein, wenn die zumindest zwei Spreizklappen unabhängig voneinander ausklappbar sind.

Das Motorrad kann ein Sensor-Aktuator-System mit zumindest einem Sensor und zumindest einen mit dem Sensor zusammenwirkenden Aktuator aufweisen, wobei
- der zumindest eine Sensor angepasst ist Seitenwindkräfte und/oder Druckunterschiede zwischen der rechten und linken Seite der Fahrgastzelle zu detektieren und
- der zumindest eine Aktor angepasst ist, die Stabilisierungseinrichtung in Abhängigkeit von den Sensorwerten auszulenken.

Als Sensor kann zumindest einen Anstellwinkelsensor verwendet werden, wobei der Anstellwinkelsensor so an der Fahrgastzelle angeordnet ist, dass ein Stellglied des Anstellwinkelsensors bei einem Seitenwind aus seiner Normalstellung ausgelenkt wird, wobei eine Auslenkung des Stellgliedes aus seiner Normalstellung ein Maß für den Seitenwind ist.

Zusätzlich oder alternativ kann der Sensor zumindest zwei Drucksensoren umfassen, wobei
- ein erster Drucksensor an der rechten Seite der Fahrgastzelle und
- ein zweiter Drucksensor an der linken Seite der Fahrgastzelle angeordnet sind, wobei ein Unterschied zwischen dem gemessenen Druck des ersten Drucksensors und dem gemessenen Druck des zweiten Drucksensors ein Maß für einen auf die Fahrgastzelle auftreffenden Seitenwind ist und wobei die Drucksensoren vorzugsweise als Statik Port ausgebildet sind.

Es können auch andere geeignete Sensoren verwendet werden, mit denen ein Seitenwind oder Druckunterschiede zwischen den beiden Seiten des Motorrades detektiert werden können.

Bei dem vorstehend erfindungsgemäßen Motorrad handelt es sich um einen Motorrad mit drei Rädern, wobei zwei Räder vorne und ein Rad hinten oder wobei zwei Räder hinten und ein Rad vorne angeordnet sind. Die erfindungsgemäße Lösung kann aber auch bei einem Motorrad mit zwei Rädern verwirklicht werden.

Das zumindest eine Seitenruder kann mehrere Glieder bzw. Segmente bzw. Abschnitte aufweisen, die jeweils relativ zueinander bewegbar sind, d.h. relativ zueinander auslenkbar sind.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung, in der die für die Erfindung relevanten Ausschnitte des erfindungsgemäßen Motorrades schematisch dargestellt sind. Es zeigt:
- Fig. 1: den Heckbereich des Motorrades mit einer als Seitenruder ausgestalteten Stabilisierungseinrichtung zur Seitenwindstabilisierung;
- Fig. 2: einen Dachbereich des Motorrades mit einer als Seitenruder ausgestalteten Stabilisierungseinrichtung zur Seitenwindstabilisierung;
- Fig. 3: einen Frontbereich des Motorrades mit einer als Seitenruder ausgestalteten Stabilisierungseinrichtung zur Seitenwindstabilisierung;
- Fig. 4: ein Beispiel eines Seitenruders mit einem daran angeordneten Hilfsruder;
- Fig. 5: eine Draufsicht auf eine Fahrgastzelle mit an der Fahrgastzelle angeordneten Spreizklappen;
- Fig. 6: einen Ausschnitt einer Fahrgastzelle mit einem daran angeordneten Anstellwinkelsensor;
- Fig. 7: eine Kopfstütze eines erfindungsgemäßen Motorrades;
- Fig. 8: einen Ausschnitt einer Tür der Fahrgastzelle mit einer im Fußbereich ausgebildeten Öffnung, die gegebenenfalls verschließbar ausgestaltet ist; und
- Fig. 9: ein mehrgliedriges Seitenruder.

### Detaillierte Beschreibung der Erfindung

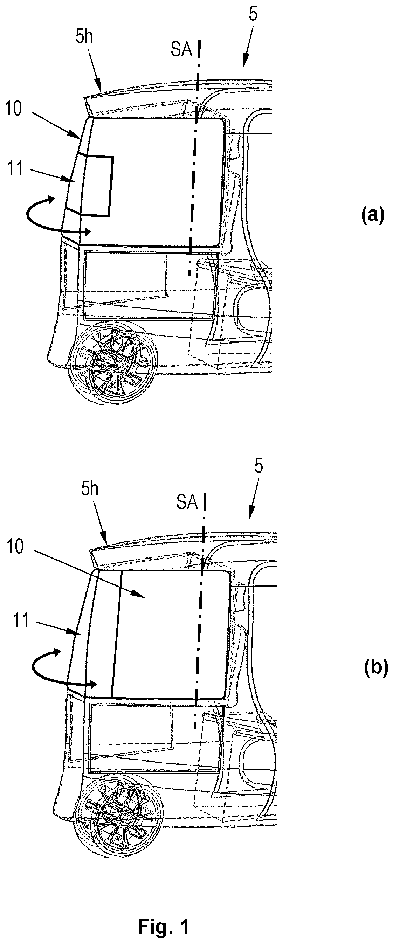

**Fig. 1** zeigt den Heckbereich 5h einer geschlossenen Fahrgastzelle 5 eines Motorrades mit einer als Seitenruder 10 ausgestalteten Stabilisierungseinrichtung zur Seitenwindstabilisierung.

Das Seitenruder 10 ist so am Heckbereich 5h der Fahrgastzelle 5 angelenkt, dass es relativ zur Fahrgastzelle 5 schwenkbar bzw. auslenkbar ist, vorzugsweise um eine Schwenkachse SA. Durch ein Auslenken des Seitenruders 10 aus seiner Normalposition, bei der das Seitenruder 10 parallel zur Längsachse des Motorrades steht, kann eine während der Fahrt auf die Fahrgastzelle 5 wirkende seitliche Kraft (z.B. bewirkt durch Seitenwind) ausgeglichen bzw. kompensiert werden, sodass das Motorrad als Ganzes einfacher und damit sicherer in der Spur gehalten werden kann. Bei den genannten seitlichen Kräften kann es sich um Seitenwinde oder Seitenböen handeln. Bei den seitlichen Kräften kann es sich aber auch um Ansaugkräfte handeln, die beispielsweise während des Überholens eines massiven Objektes, etwa ein Lastkraftwagens oder ein Bus, auf die Fahrgastzelle wirken.

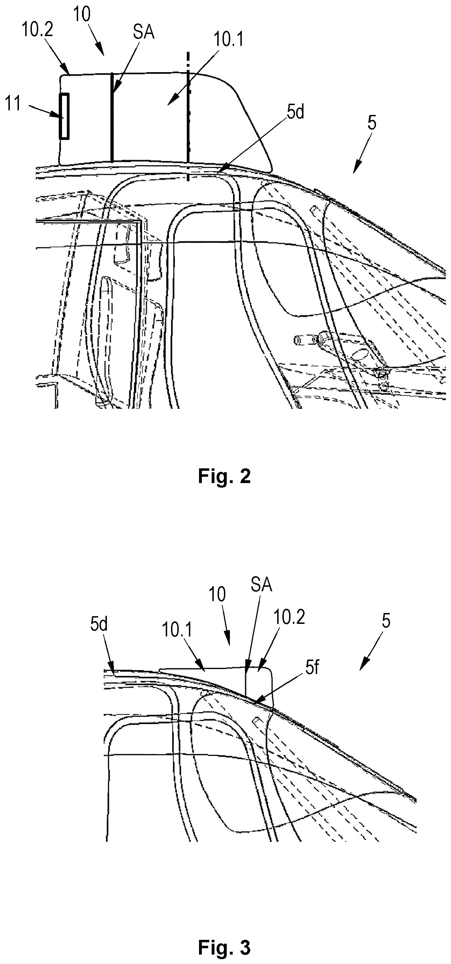

**Fig. 2** zeigt einen Dachbereich 5d einer geschlossenen Fahrgastzelle 5 des Motorrades mit einer als Seitenruder 10 ausgestalteten Stabilisierungseinrichtung zur Seitenwindstabilisierung.

Das Seitenruder 10 ist hier am bzw. auf dem Dach 5d der Fahrgastzelle 5 angeordnet und so am Dach festigt, dass es um eine Schwenkachse SA, die im Wesentlichen senkrecht zur Längsachse des Motorrades steht, schwenkbar ist.

In einer Ausgestaltung kann das Seitenruder 10 einteilig ausgestaltet sein, d.h. das komplette Seitenruder 10 ist schwenkbar an einer Schwenkachse SA befestigt.

In einer alternativen Ausgestaltung kann das Seitenruder 10 auch zweiteilig ausgestaltet sein, wobei ein erster Teil des Seitenruders 10 einen feststehenden Teil 10.1 und ein zweiter Teil des Seitenruders 10 einen schwenkbaren Teil 10.2 bilden. Der feststehende Teil 10.1 des Seitenruders 10 ist hierbei im Wesentlichen senkrecht auf dem Dach der Fahrgastzelle 5 befestigt. Der schwenkbare Teil 10.2 des Seitenruders 10 ist am hinteren Ende des feststehenden Teils 10.1 über eine Schwenkachse SA schwenkbar an dem feststehenden Teil 10.1 angelenkt.

Mit Hilfe des am Dach angeordneten Seitenruders 10 kann durch ein Auslenken des Seitenruders 10 aus seiner Normalposition, bei der das Seitenruder 10 parallel zur Längsachse des Motorrades steht, ebenfalls eine auf die Fahrgastzelle 5 wirkende seitliche Kraft ausgeglichen bzw. kompensiert werden, sodass das Motorrad als Ganzes einfacher und damit sicherer in der Spur gehalten werden kann.

Bei den in Fig. 1 und Fig. 2 gezeigten Ausgestaltungen wird erfindungsgemäß an dem jeweiligen Seitenruder 10 ein Hilfsruder 11 angeordnet. Das Hilfsruder 11 ist hierbei am jeweiligen hinteren Ende des Seitenruders 10 angelenkt und relativ zum Seitenruder 10 auslenkbar, wobei das Hilfsruder 11 entgegen der Auslenkrichtung des Seitenruders 10 auslenkbar ist. Das Hilfsruder 11 wirkt hierbei als Flettner-Ruder bzw. Flettner-Klappe.

Bei der in Abbildung (a) der Fig. 1 und bei der in Fig. 2 gezeigten Ausgestaltung ist die Höhe des Hilfsruders 11 geringer als die Höhe des Seitenruders 10. Zudem ist das Hilfsruder 11 im Wesentlichen in das Seitenruder 10 integriert, sodass das Hilfsruder 11 in seiner Normalposition weder hinten noch seitlich an dem Seitenruder 10 übersteht.

Bei der in Abbildung (b) der Fig. 1 gezeigten Ausgestaltung entspricht die Höhe des Hilfsruders 11 im Wesentlichen der Höhe des Seitenruders 10, sodass das Hilfsruders 11 am hinteren Ende des Seitenruders 10 übersteht.

Das Hilfsruder 11 ist erfindungsgemäß so an dem Seitenruder 10 angelenkt, dass ein Auslenken des Seitenruders 10 automatisch ein Auslenken des Hilfsruders 11 entgegen der Auslenkrichtung des Seitenruders 10 bewirkt. Das ist über entsprechend ausgestaltete Koppelgelenke bzw. über Gestänge bewerkstelligt. Das Hilfsruder 11 kann über ein solches Gestänge mit einem unbeweglichen Teil der Fahrgastzelle bzw. mit dem feststehenden Teil 10.1 des Seitenruders 10 gekoppelt sein. Wird das Seitenruder 10 ausgelenkt, dann lenkt dieses Gestänge das Hilfsruder 11 automatisch in die entgegengesetzte Richtung aus.

In einer alternativen, nicht beanspruchte, Ausgestaltung kann das Hilfsruder 11 aber auch so an dem Seitenruder 10 angelenkt sein, dass das Hilfsruder 11 unabhängig von dem Auslenken des Seitenruders 10 relativ zum Seitenruder 10 auslenkbar ist. Das kann über entsprechende Stellglieder bewirkt werden, die einerseits mit dem Seitenruder 10 und andererseits mit dem Hilfsruder 11 gekoppelt sind.

Mit Hilfe des Hilfsruders 11 kann das Seitenrudersystem hinsichtlich der seitlich auftretenden Kräfte neutral eingestellt werden.

**Fig. 3** zeigt einen Frontbereich 5f einer Fahrgastzelle 5 des Motorrades mit einer als Seitenruder 10 ausgestalteten Stabilisierungseinrichtung zur Seitenwindstabilisierung. Bei der in Fig. 3 gezeigten Ausgestaltung ist das Seitenruder 10 oben im Bereich des Übergangs von Frontbereich 5f zu Dachbereich 5d angeordnet. Das Seitenruder 10 kann aber auch weiter unten angeordnet sein, etwa in einem Bereich unterhalb der Frontscheibe der Fahrgastzelle 5.

Das Seitenruder 10 ist hier zweiteilig ausgestaltet, wobei ein erster Teil des Seitenruders 10 einen feststehenden Teil 10.1 und ein zweiter Teil des Seitenruders 10 einen schwenkbaren Teil 10.2 bilden. Der feststehende Teil 10.1 ist an der Fahrgastzelle 5 befestigt. Der schwenkbare Teil 10.2 ist am vorderen Ende des feststehenden Teils 10.1 über eine Schwenkachse SA am feststehenden Teil 10.1 angelenkt, wobei die Schwenkachse SA im Wesentlichen senkrecht zur Längsachse des Motorrades steht. Alternativ kann der schwenkbare Teil auch am hinteren Ende des feststehenden Teils über eine Schwenkachse SA am feststehenden Teil angelenkt sein - in diesem Fall wäre der Teil 10.1 der schwenkbare Teil und der Teil 10.2 der feststehende Teil.

Auch bei der in Fig. 3 gezeigten Ausgestaltung kann ein Hilfsruder vorgesehen sein, das dann am vorderen Ende des Seitenruders 10, d.h. am vorderen Ende des schwenkbaren Teils 10.2 angelenkt ist und entgegen der Auslenkrichtung des Seitenruders 10 bzw. des schwenkbaren Teils 10.2 auslenkbar ist.

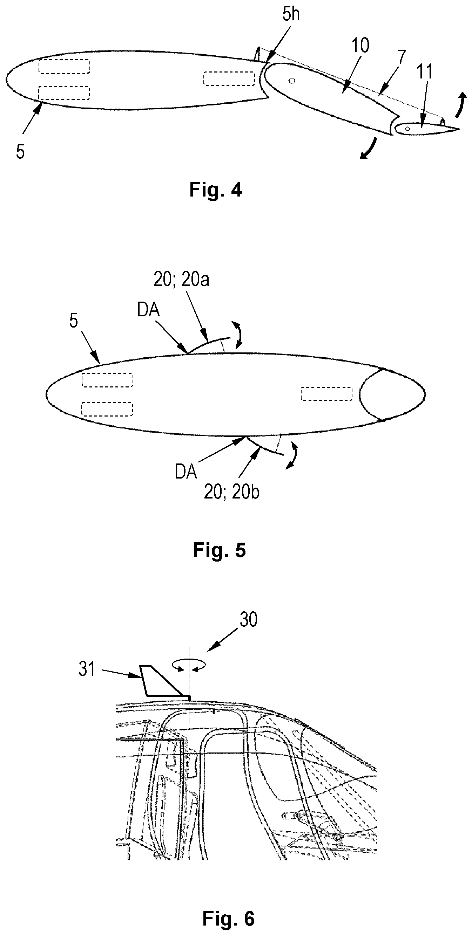

**Fig. 4** zeigt eine Draufsicht einer Fahrgastzelle 5 mit einem am Heck 5h der Fahrgastzelle 5 angelenkten Seitenruder 10 und einem am Seitenruder 10 angelenkten Hilfsruder 11. Das Hilfsruder 5 ist hier so am hinteren Ende des Seitenruders 10 angelenkt, dass es entgegen der Schwenkrichtung der Seitenruders 10 auslenkbar ist, also als Flettner-Ruder bzw. als Flettner-Klappe betrieben wird.

Bei der in Fig. 4 gezeigten nicjt beanspruchten Ausgestaltung ist das Hilfsruder 11 über ein Zugseil 7 mit einem feststehenden Teil gekoppelt. Der feststehende Teil wird hier von der Fahrgastzelle 5 selbst gebildet. Selbstverständlich ist ein entsprechendes Zugseil auch an der anderen Seite des Seitruders vorgesehen, um auch bei einem Auslenken des Seitenruders 10 in die andere Richtung ein entsprechendes gegenläufiges Auslenken des Hilfsruders 11 zu gewährleisten. Die Zugseile können auch innerhalb der Ruder, d.h. innerhalb des Seitenruders 10 und innerhalb des Hilfsruders 11 verlaufen.

Erfindungsgemäß ist ein Gestänge bzw. Koppelglieder vorgesehen, die das Hilfsruder 11 mit einem feststehenden Teil, d.h. mit der Fahrgastzelle 5 verbinden. Das Gestänge bzw. die Koppelglieder können außerhalb der Ruder (wie in Fig. 4 gezeigt) oder innerhalb der Ruder verlaufen.

In einer weiteren nicht beanspruchten alternativen Ausgestaltung können anstelle von Zugseilen bzw. anstelle eines Gestänges Stellglieder aus einem Formgedächtnismaterial vorgesehen werden, die bei einer Beaufschlagung mit einer Temperatur (z.B. mittels Beaufschlagung durch einen elektrischen Strom) ihre Form (z.B. Länge) ändern und so ein Auslenken des Seitenruders und/oder des Hilfsruders bewirken.

Die vorstehend gezeigten Seitenruder 10 und Hilfsruder 11 können selbstkompensierend aufgebaut sein. D.h. die beiden Ruder 10, 11 und die dazugehörige Mechanik (Gestänge. Koppelglieder, Zugseile, Schwenkachsen) sind so aufgebaut, dass mit ihnen die seitlich auf die Fahrgastzelle wirkenden Kräfte auch ohne auf die Ruder 10, 11 einwirkende Stellglieder kompensiert werden können. Der Aufbau des gesamten Systems zur Seitenwindstabilisierung wird hierbei besonders einfach und insbesondere wenig störungsanfällig ermöglicht.

**Fig. 5** zeigt eine Draufsicht auf eine Fahrgastzelle 5 mit einer als Spreizklappen 20 ausgebildete Stabilisierungseinrichtung, wobei die Spreizklappen an der Fahrgastzelle angeordnet sind.

Vorzugsweise umfassen die Spreizklappen zwei Spreizklappen, wobei eine erste Spreizklappe 20a an einer (z.B. an der rechten) Seite der Fahrgastzelle 5 und eine zweite Spreizklappe 20b an der anderen (z.B. an der linken) Seite der Fahrgastzelle 5 angeordnet sind. In einer Ausgestaltung können auf jeder Seite der Fahrgastzelle auch mehrere Spreizklappen vorgesehen sein, wobei es vorteilhaft ist, wenn an beiden Seiten jeweils gleich viele Spreizklappen vorgesehen sind.

Die Spreizklappen sind ausklappbar an der Fahrgastzelle 5 angelenkt. In ihrer Normalposition, d.h. im eingeklappten Zustand fügen sich die Spreizklappen vorzugsweise in die Oberfläche der Fahrgastzelle 5 ein, sodass sie keinen zusätzlichen Luftwiderstand oder Luftverwirbelungen bzw. seitlich wirksame Kräfte quer zur Anströmung erzeugen.

Für die Seitenwindstabilisierung wichtig ist es, dass die auf der einen Seite der Fahrgastzelle 5 angeordneten Spreizklappen 20a unabhängig von den an der anderen Seite der Fahrgastzelle 5 angeordneten Spreizklappen 20b ausgelenkt werden können, um eine effektive Kompensierung der seitlich auf die Fahrgastzelle wirkenden Kräfte zu ermöglichen. Über Stellglieder können die Spreizklappen unabhängig voneinander um eine Drehachse DA ausgeklappt bzw. eingeklappt werden.

Die in Fig. 5 gezeigten Spreizklappen 20 sind leicht gewölbt ausgestaltet. Es ist aber auch möglich und in manchen Fällen sogar vorteilhaft, jedenfalls die außenliegende Oberfläche der Spreizklappen 20 flach, d.h. nicht gewölbt auszugestalten.

Die vorstehend gezeigten Stabilisierungseinrichtungen zur Seitenwindstabilisierung (Ruder am Heck, Ruder auf dem Dach, Ruder an der Front, Spreizklappen) können bei Bedarf miteinander kombiniert werden. Beispielsweise kann ein Motorrad bereitgestellt werden, an dessen Fahrgastzelle ein Ruder 10, 11 am Heck der Fahrgastzelle 5 angeordnet ist und auf beiden Seiten der Fahrgastzelle 5 jeweils eine Spreizklappe 20a, 20b angeordnet sind. Je nach konkreter Form der Fahrgastzelle kann so eine optimale Kombination von Stabilisierungseinrichtungen zur Seitenwindstabilisierung vorgesehen werden.

Anstelle des vorstehend genannten selbstkompensierenden Aufbaus des Seitenruders 10 und des Hilfsruders 11 können diese auch aktiv gesteuert werden. Hierzu ist ein Sensor-Aktuator-System vorgesehen, das zumindest einen Sensor und zumindest einen mit dem Sensor zusammenwirkenden Aktuator aufweist. Der Sensor ist hierbei angepasst Seitenwindkräfte und/oder Druckunterschiede zwischen der rechten und linken Seite der Fahrgastzelle zu detektieren. Der Aktuator ist angepasst ist, die Stabilisierungseinrichtung in Abhängigkeit von den Sensorwerten auszulenken. Beispielsweise kann bei einem detektierten Seitenwind das Seitenruder 10 mit Hilfe des Aktuators soweit ausgelenkt werden, dass durch die Auslenkung des Seitruders die Seitenwindkräfte weitgehend oder vollständig kompensiert werden. Entsprechend kann auch dem Hilfsruder 11 ein Aktuator zugeordnet sein, mit dem das Hilfsruder etwa zum Zwecke der Trimmung ausgelenkt werden kann.

In entsprechender Weise können auch den Spreizklappen 20 entsprechende Aktuatoren zugeordnet sein, um diese in Abhängigkeit von den seitlich auf die Fahrgastzelle wirkenden Kräften aus- bzw. einzuklappen.

**Fig. 6** zeigt einen Ausschnitt einer Fahrgastzelle mit einem daran angeordneten Anstellwinkelsensor 30, der für die Detektion von Seitenwinden verwendet wird. Der Anstellwinkelsensor 30 weist ein bewegliches, d.h. um eine Achse drehbares Stellglied 31 (sog. Fahne) auf. Der Drehwinkel des Stellgliedes 31 ist hierbei ein Maß für die auf die Fahrgastzelle wirkenden Seitenwindkräfte. Der Anstellwinkelsensor 30 wird hierbei so an der Fahrgastzelle angeordnet, dass ein Seitenwind die Lage des Stellgliedes 31 beeinflussen, d.h. das Stellglied drehen kann. Vorzugsweise wird der Anstellwinkelsensor am Bodenblech oder auf dem Dach der Fahrgastzelle angeordnet, wobei in Fig. 6 die Anordnung auf dem Dach gezeigt ist. Der Anstellwinkelsensor wird erfindungsgemäß also als Schiebewinkelsensor verwendet.

Zusätzlich oder alternativ zu dem Anstellwinkelsensor kann der Sensor zumindest zwei Drucksensoren umfassen, wobei ein erster Drucksensor an der rechten Seite der Fahrgastzelle und ein zweiter Drucksensor an der linken Seite der Fahrgastzelle angeordnet sind. Ein Unterschied zwischen dem gemessenen Druck des ersten Drucksensors und dem gemessenen Druck des zweiten Drucksensors kann dann ein Maß für einen auf die Fahrgastzelle auftreffenden Seitenwind sein. Bei den Drucksensoren kann es sich bei einer bevorzugten Ausgestaltung um sogenannte Statik Ports handeln.

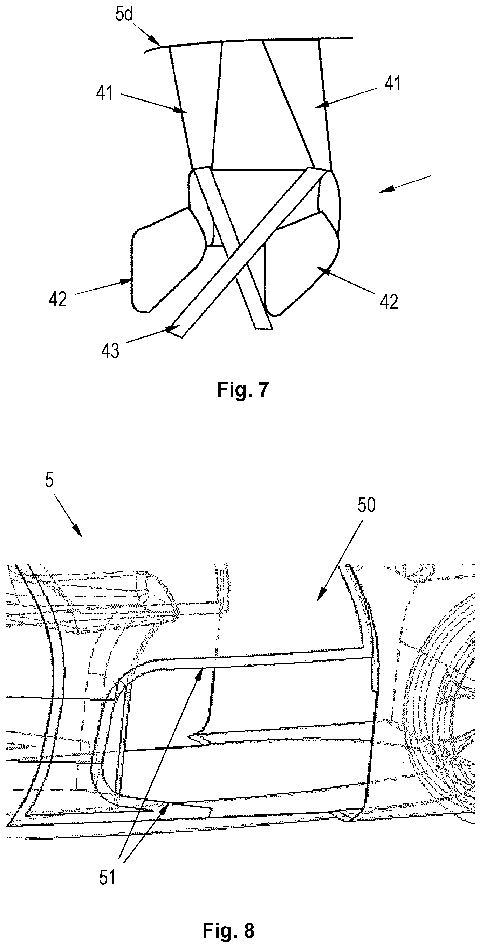

**Fig. 7** zeigt eine Kopfstütze 40 eines erfindungsgemäßen Motorrades. Die Kopfstütze 40 ist hier am Dach der Fahrgastzelle befestigt und ragt vom Dach der Fahrgastzelle nach unten. Die Befestigung der Kopfstütze am Dach der Fahrgastzelle erfolgt über eine oder zwei Befestigungsstreben 41, wobei in Fig. 7 zwei Befestigungsstreben 41 gezeigt sind.

Die Befestigungsstreben 41 können so ausgestaltet sein, dass die Höhe der Kopfstütze, d.h. der Abstand der Kopfstütze zum Dach der Fahrgastzelle eingestellt werden kann, um sie an die Körpergröße des Fahrers anzupassen. Die Befestigungsstreben 41 können hierzu beispielweise teleskopartig ausgestaltet sein. Alternativ kann die Kopfstütze so an den Befestigungsstreben 41 angeordnet sein, dass sie sich entlang der Befestigungsstreben 41 relativ zu den Befestigungsstreben 41 bewegen lässt und an einer vorbestimmten Position arretieren lässt.

In einer Ausgestaltung kann die Kopfstütze wegklappbar ausgestaltet sein, d.h. sie lässt sich nach oben hin wegklappen und in der weggeklappten Position arretieren.

In einer alternativen Ausgestaltung ist die Kopfstütze über ein Gestänge am Boden der Fahrgastzelle befestigt. Dieses Gestänge kann wiederum teleskopartig ausgestaltet sein, um die vertikale Position der Kopfstütze zu verändern. Die vertikale Position der Kopfstütze kann auch durch Verschieben der Kopfstütze entlang des Gestänges und relativ zum Gestänge erfolgen.

An den beiden seitlichen Enden der Kopfstütze 40 ist jeweils ein Seitaufprallschutz 42 vorgesehen. Der Seitaufprallschutz kann so ausgestaltet sein, dass dieser nicht nur den Kopf, sondern auch die Schultern und gegebenenfalls auch die Oberarme schützt.

Ferner ist an der Kopfstütze 40 auch ein Sicherheitsgurt 43 befestigt.

In Fig. 7 ist eine Kopfstütze für den Fahrer eines erfindungsgemäßen Motorrades gezeigt. Eine solche Kopfstütze kann auch für den hinter dem Fahrer platzierten Beifahrer vorgesehen sein. Das Vorsehen dieser Kopfstütze für den Fahrer bringt jedoch spezielle Vorteile mit sich. Einerseits kann auf eine Rückenlehne verzichtet werden, um dort die Kopfstütze zu befestigen (wie bei einem PKW-Sitz) - dadurch kann erheblich Gewicht eingespart werden. Andererseits wird durch den Verzicht einer Rückenlehne das Einsteigen des Beifahrers erheblich erleichtert. Zudem können Türen kleiner dimensioniert werden.

**Fig. 8** zeigt einen Ausschnitt einer Tür 50 der Fahrgastzelle mit einer im Fußbereich ausgebildeten Öffnung 51. Die Tür 50 selbst kann beispielsweise als Schiebetür, Falttür oder Flügeltür ausgestaltet sein. Selbstverständlich kann die Tür auch als normale Schwenktür ausgestaltet sein.

Die im Fußbereich ausgebildete Öffnung 51 ist dazu vorgesehen, dass der Fahrer den Fuß durch die Öffnung 51 hindurchstrecken kann, um sich etwa beim Anhalten des Motorrades abzustützen.

Auf der gegenüberliegenden Seite der Fahrgastzelle kann ebenfalls eine Tür mit einer entsprechenden Öffnung 51 vorgesehen sein.

Alternativ kann auf eine zweite Tür auch verzichtet werden. In diesem Fall ist es vorteilhaft, wenn die Verkleidung der Fahrgastzelle dennoch eine Öffnung 51 vorsieht, um auch den zweiten Fuß durch die Öffnung 51 hindurchstrecken zu können.

Die Öffnung bzw. die Öffnungen können verschließbar ausgestaltet sein, sodass diese nur bei Gebrauch geöffnet werden müssen. In einer Ausgestaltung kann es vorgesehen sein, wenn die Öffnungen ab einer bestimmten Fahrgeschwindigkeit automatisch schließen und unterhalb einer bestimmten Fahrgeschwindigkeit (etwa unterhalb von 5 km/h) automatisch öffnen. Zum Schließen der Öffnungen können entsprechende Schiebelemente vorgesehen werden.

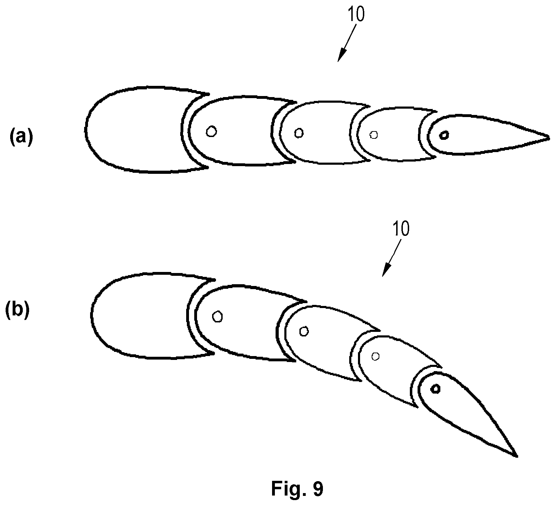

**Fig. 9** zeigt ein mehrgliedriges Seitenruder 10, d.h. ein Seitenruder 10, das mehrere hintereinander angeordnete Glieder / Segmente bzw. hintereinander angeordnete Abschnitte aufweist.

Die einzelnen Glieder bzw. Abschnitte sind relativ zueinander bewegbar bzw. auslenkbar. Abbildung (a) zeigt ein Seitenruder 10, bei dem sich die einzelnen Abschnitte in einer Normalstellung befinden, d.h. bei dem die Abschnitte nicht ausgelenkt sind. Abbildung (b) zeigt das in Abbildung (a) gezeigte Seitenruder 10, bei dem jeder Abschnitt relativ zum vorhergehenden Abschnitt ausgelenkt ist.

Dadurch wird es möglich, beim Auslenken des Seitenruders 10 einen gekrümmten Verlauf des Seitenruders zu erzeugen, wie in Abbildung (b) gezeigt, d.h. die eine Seite des Seitenruders weist eine im Wesentlichen konvexe Krümmung auf, während die andere Seite des Seitenruders eine im Wesentlichen konkave Krümmung aufweist.

Vorteilhaft kann es hierbei sein, wenn der Auslenkwinkel der einzelnen Abschnitte des Seitenruders relativ zum jeweiligen vorhergehenden Abschnitt unterschiedlich festgelegt werden kann.

Jedem Abschnitt kann ein Stellglied zugeordnet sein, mit dem der jeweilige Abschnitt relativ zum vorhergehenden Abschnitt ausgelenkt werden kann. Bei den Stellgliedern kann es sich um hydraulische Stellglieder handeln. In einer Ausgestaltung kann es sich bei den Stellgliedern um Elemente aus einem Formgedächtnismaterial handeln.

### Bezugszeichen:

- 5: Fahrgastzelle des Motorrades
- 5d: Dachbereich der Fahrgastzelle 5
- 5f: Frontbereich der Fahrgastzelle 5
- 5h: Heckbereich der Fahrgastzelle 5
- 7: Zugseil
- 10: Seitenruder
- 10.1: feststehender Teil des Seitenruders 10
- 10.2: schwenkbarer Teil des Seitenruders 10
- 11: Hilfsruder
- 20: Spreizklappen
- 20a: rechte Spreizklappe
- 20b: linke Spreizklappe
- 30: Anstellwinkelsensor
- 31: Stellglied des Anstellwinkelsensors 30
- 40: Kopfstütze
- 41: Befestigungsstreben der Kopfstütze
- 42: Seitaufprallschutz
- 43: Sicherheitsgurt
- 50: Tür der Fahrgastzelle 5
- 51: Öffnung in der Tür 50
- DA: Drehachse
- SA: Schwenkachse

## Patentansprüche

1. Motorrad, wobei das Motorrad eine weitgehend geschlossene Fahrgastzelle (5) aufweist, wobei
die Fahrgastzelle (5) zumindest eine Stabilisierungseinrichtung zur Seitenwindstabilisierung aufweist,
die Stabilisierungseinrichtung zumindest ein relativ zur Fahrgastzelle (5) auslenkbares Seitenruder (10) umfasst und
das zumindest eine Seitenruder (10) am Heck (5h) und/oder am Dach (5d) und/oder an der Frontseite (5f) der Fahrgastzelle (5) angeordnet ist,
**dadurch gekennzeichnet, dass**
an dem zumindest einen Seitenruder (11) ein relativ zum Seitenruder (10) auslenkbares Hilfsruder (11) angeordnet ist, wobei das Hilfsruder (11) derart an dem Seitenruder (10) angelenkt ist, dass es entgegen der Auslenkrichtung des Seitenruders (10) auslenkbar ist, und
das Hilfsruder (11) über ein Koppelgelenk an dem Seitenruder (10) angelenkt ist, wobei das Koppelgelenk derart ausgestaltet ist, dass ein Auslenken des Seitenruders (10) ein Auslenken des Hilfsruders (11) entgegen der Auslenkrichtung des Seitenruders (10) bewirkt.

2. Motorrad nach Anspruch 1, wobei das zumindest eine Seitenruder (10) von einer ersten Position in eine zweite Position auslenkbar ist, wobei
- in der ersten Position das Seitenruder (10) parallel zur Längsachse des Motorrades verläuft, und
- in der zweiten Position das Seitenruder (10) in einem von Null verschiedenen Winkel (α) zur Längsachse des Motorrades verläuft.

3. Motorrad nach einem der vorhergehenden Ansprüche, wobei die Stabilisierungseinrichtung zumindest zwei Spreizklappen (20; 20a; 20b) umfasst, wobei
- eine erste Spreizklappe (20a) an der rechten Seite der Fahrgastzelle (5) und
- eine zweite Spreizklappe (20b) an der linken Seite der Fahrgastzelle (5) angeordnet sind, und wobei die Spreizklappen (20; 20a; 20b) ausklappbar an der Fahrgastzelle (5) angelenkt sind.

4. Motorrad nach Anspruch 3, wobei die zumindest zwei Spreizklappen (20; 20a; 20b) unabhängig voneinander ausklappbar sind.

5. Motorrad nach einem der vorhergehenden Ansprüche, wobei dieses ein Sensor-Aktuator-System mit zumindest einem Sensor und zumindest einen mit dem Sensor zusammenwirkenden Aktuator aufweist, wobei
- der zumindest eine Sensor angepasst ist Seitenwindkräfte und/oder Druckunterschiede zwischen der rechten und linken Seite der Fahrgastzelle (5) zu detektieren und
- der zumindest eine Aktor angepasst ist, die Stabilisierungseinrichtung in Abhängigkeit von den Sensorwerten auszulenken.

6. Motorrad nach Anspruch 5, wobei als Sensor zumindest einen Anstellwinkelsensor 30 verwendet wird, wobei der Anstellwinkelsensor (30) so an der Fahrgastzelle (5) angeordnet ist, dass ein Stellglied (31) des Anstellwinkelsensors (30) bei einem Seitenwind aus seiner Normalstellung ausgelenkt wird, wobei eine Auslenkung des Stellgliedes (31) aus seiner Normalstellung ein Maß für den Seitenwind ist.

7. Motorrad nach Anspruch 5 oder 6, wobei der Sensor zumindest zwei Drucksensoren umfasst, wobei
- ein erster Drucksensor an der rechten Seite der Fahrgastzelle (5) und
- ein zweiter Drucksensor an der linken Seite der Fahrgastzelle (5) angeordnet sind, wobei ein Unterschied zwischen dem gemessenen Druck des ersten Drucksensors und dem gemessenen Druck des zweiten Drucksensors ein Maß für einen auf die Fahrgastzelle auftreffenden Seitenwind ist und wobei die Drucksensoren vorzugsweise als Statik Port ausgebildet sind.

8. Motorrad nach einem der vorhergehenden Ansprüche, wobei das Motorrad drei Räder aufweist.

9. Motorrad nach einem der vorhergehenden Ansprüche, wobei das zumindest eine Seitenruder (10) einen Anzahl von Segmenten aufweist, die jeweils relativ zueinander bewegbar sind.

## Claims

1. Motorcycle, the motorcycle having a largely closed passenger compartment (5),
the passenger compartment (5) having at least one stabilization device for crosswind stabilization,
the stabilization device comprising at least one rudder (10) which is deflectable relative to the passenger compartment (5) and
the at least one rudder (10) being arranged at the rear (5h) and/or on the roof (5d) and/or on the front face (5f) of the passenger compartment (5),
**characterized in that**
an auxiliary rudder (11) which can be deflected relative to the rudder (10) is arranged on the at least one rudder (11), the auxiliary rudder (11) being hinged to the rudder (10) such that it can be deflected against the deflection direction of the rudder (10), and
the auxiliary rudder (11) is hinged to the rudder (10) via a coupling joint, the coupling joint being designed such that a deflection of the rudder (10) causes a deflection of the auxiliary rudder (11) against the deflection direction of the rudder (10).

2. Motorcycle according to claim 1, wherein the at least one rudder (10) is deflectable from a first position into a second position, wherein
- in the first position, the rudder (10) extends in parallel with the longitudinal axis of the motorcycle, and
- in the second position, the rudder (10) extends at an angle (α) different from zero toward the longitudinal axis of the motorcycle.

3. Motorcycle according to either of the preceding claims, wherein the stabilization device comprises at least two split flaps (20; 20a; 20b), wherein
- a first split flap (20a) is arranged on the right-hand side of the passenger compartment (5) and
- a second split flap (20b) is arranged on the left-hand side of the passenger compartment (5)
and wherein the split flaps (20; 20a; 20b) are hinged to the passenger compartment (5) so as to fold out.

4. Motorcycle according to claim 3, wherein the at least two split flaps (20; 20a; 20b) can be folded out independently of one another.

5. Motorcycle according to any of the preceding claims, wherein it comprises a sensor-actuator system having at least one sensor and at least one actuator which interacts with the sensor, wherein
- the at least one sensor is adapted to detect crosswind forces and/or pressure differences between the right-hand side and left-hand side of the passenger compartment (5), and
- the at least one actuator is adapted to deflect the stabilization device on the basis of the sensor values.

6. Motorcycle according to claim 5, wherein at least one angle of attack sensor 30 is used as the sensor, wherein the angle of attack sensor (30) is arranged on the passenger compartment (5) in such a way that an actuator (31) of the angle of attack sensor (30) is deflected from its normal position during a crosswind, wherein a deflection of the actuator (31) from its normal position is a measure of the crosswind.

7. Motorcycle according to either claim 5 or claim 6, wherein the sensor comprises at least two pressure sensors, wherein
- a first pressure sensor is arranged on the right-hand side of the passenger compartment (5) and
- a second pressure sensor is arranged on the left-hand side of the passenger compartment (5)
wherein a difference between the measured pressure of the first pressure sensor and the measured pressure of the second pressure sensor is a measure of a crosswind impinging on the passenger compartment and wherein the pressure sensors are preferably designed as a static port.

8. Motorcycle according to any of the preceding claims, wherein the motorcycle has three wheels.

9. Motorcycle according to any of the preceding claims, wherein the at least one rudder (10) has a number of segments which are movable relative to one another in each case.

## Revendications

1. Moto, dans laquelle la moto présente un habitacle (5) en grande partie fermé, dans laquelle
l'habitacle (5) présente au moins un dispositif de stabilisation pour la stabilisation en cas de vent latéral,
le dispositif de stabilisation comprend au moins un gouvernail de direction (10) pouvant être orienté par rapport à l'habitacle (5) et
l'au moins un gouvernail de direction (10) est disposé à l'arrière (5h) et/ou sur le toit (5d) et/ou sur le côté avant (5f) de l'habitacle (5),
**caractérisée en ce que**
un gouvernail auxiliaire (11) pouvant être orienté par rapport au gouvernail de direction (10) est disposé au niveau de l'au moins un gouvernail de direction (11), dans laquelle le gouvernail auxiliaire (11) est articulé sur le gouvernail de direction (10) de telle sorte qu'il peut être orienté à l'opposé du sens d'orientation du gouvernail de direction (10), et
le gouvernail auxiliaire (11) est articulé sur le gouvernail de direction (10) par l'intermédiaire d'une articulation d'accouplement, dans laquelle l'articulation d'accouplement est conçue de telle sorte qu'une orientation du gouvernail de direction (10) entraîne une orientation du gouvernail auxiliaire (11) à l'opposé du sens d'orientation du gouvernail de direction (10).

2. Moto selon la revendication 1, dans laquelle l'au moins un gouvernail de direction (10) peut être orienté d'une première position vers une seconde position, dans laquelle
- dans la première position, le gouvernail de direction (10) s'étend parallèlement à l'axe longitudinal de la moto, et
- dans la seconde position, le gouvernail de direction (10) s'étend, par rapport à l'axe longitudinal de la moto, selon un angle (α) différent de zéro.

3. Moto selon l'une des revendications précédentes, dans laquelle le dispositif de stabilisation comprend au moins deux volets expansibles (20 ; 20a ; 20b), dans laquelle
- un premier volet expansible (20a) est disposé sur le côté droit de l'habitacle (5) et
- un second volet expansible (20b) est disposé sur le côté gauche de l'habitacle (5),
et dans laquelle les volets expansibles (20 ; 20a - 20b) sont articulés de manière à pouvoir être dépliés sur l'habitacle (5).

4. Moto selon la revendication 3, dans laquelle les au moins deux volets expansibles (20 ; 20a - 20b) peuvent être dépliés indépendamment l'un de l'autre.

5. Moto selon l'une des revendications précédentes, dans laquelle celle-ci présente un système capteur-actionneur comportant au moins un capteur et au moins un actionneur coopérant avec le capteur, dans laquelle
- l'au moins un capteur est adapté pour détecter des forces de vent latéral et/ou des différences de pression entre le côté droit et le côté gauche de l'habitacle (5) et
- l'au moins un actionneur est adapté pour orienter le dispositif de stabilisation en fonction des valeurs de capteur.

6. Moto selon la revendication 5, dans laquelle au moins un capteur d'angle d'attaque 30 est utilisé comme capteur, dans laquelle le capteur d'angle d'attaque (30) est disposé sur l'habitacle (5) de sorte qu'un organe de réglage (31) du capteur d'angle d'attaque (30) est orienté à l'écart de sa position normale en cas de vent latéral, dans laquelle une orientation de l'organe de réglage (31) à l'écart de sa position normale est une mesure du vent latéral.

7. Moto selon la revendication 5 ou 6, dans laquelle le capteur comprend au moins deux capteurs de pression, dans laquelle
- un premier capteur de pression est disposé sur le côté droit de l'habitacle (5) et
- un second capteur de pression est disposé sur le côté gauche de l'habitacle (5),
dans laquelle une différence entre la pression mesurée par le premier capteur de pression et la pression mesurée par le second capteur de pression est une mesure d'un vent latéral soufflant sur l'habitacle, et dans laquelle les capteurs de pression sont de préférence réalisés sous forme de prise statique.

8. Moto selon l'une des revendications précédentes, dans laquelle la moto présente trois roues.

9. Moto selon l'une des revendications précédentes, dans laquelle l'au moins un gouvernail de direction (10) présente un certain nombre de segments respectivement mobiles les uns par rapport aux autres.
